**Europäisches Patentamt**

**European Patent Office**

**Office européen des brevets**

(11) Veröffentlichungsnummer: **0 015 411**
A1

# (12) EUROPÄISCHE PATENTANMELDUNG

(21) Anmeldenummer: **80100704.8**

(22) Anmeldetag: **12.02.80**

(51) Int. Cl.³: **A 47 F 3/04**, F 16 L 59/08, F 16 L 59/02, B 32 B 15/14, E 04 B 1/78

(30) Priorität: **01.03.79 DE 2907901**

(43) Veröffentlichungstag der Anmeldung: **17.09.80**
**Patentblatt 80/19**

(84) Benannte Vertragsstaaten: **AT BE CH FR GB IT LU NL SE**

(71) Anmelder: **Remis Gesellschaft für Entwicklung und Vertrieb von technischen Elementen mit beschränkter Haftung, Sintherer Strasse 9 a, D-5000 Köln 30 (DE)**

(72) Erfinder: **Isfort, Paul, Sintherer Strasse 9 a, D-5000 Köln 30 (DE)**

(74) Vertreter: **Selting, Günther, Dipl.-Ing. et al, Deichmannhaus, D-5000 Köln 1 (DE)**

(54) Isolierstoffbahn.

(57) Eine Isolierstoffbahn (22, 23, 24), mit der eine Kühltruhe o. dgl. bedeckt wird, um die Kälteverluste zu verringern, ist auf ihrer Außenseite mit einer Metallschicht (26) versehen. Die Metallschicht reflektiert einen Teil der auf die Isolierstoffbahn auftreffenden Wärmestrahlung und verhindert eine starke Erwärmung der Kunststoffschicht (22). Die Metallschicht (26) ist außen durch eine transparente Folie (25) bedeckt.

Isolierstoffbahn

Die Erfindung betrifft eine Isolierstoffbahn zum Bedecken
von Kälteeinrichtungen, mit einer beidseitig bestrichenen
Kunststoffschicht.

Zur Verhinderung von Kälteverlusten ist es bekannt, Kühltruhen, Kühlboxen, Kühlregale u.dgl., die beispielsweise
in Lebensmittelgeschäften aufgestellt sind, außerhalb der
Geschäftszeiten mit einer Isolierstoffbahn zu bedecken.
Die Isolierstoffbahn kann Bestandteil eines Rollos sein,
das derart an der Kälteeinrichtung angebracht ist, daß
es über deren Öffnung ausgebreitet werden kann.

Es ist bekannt, als Material für die Isolierstoffbahn ein
Faservlies zu verwenden, das an seinen beiden Seiten einen durchgehenden Kunststoffstrich trägt. Das Faservlies hat die für den Anwendungszweck erforderliche Reißfestigkeit während der Strich das Faservlies feuchtigkeitsdicht bedeckt. Dadurch wird verhindert, daß das Faservlies direk· mit Lebensmitteln in Berührung kommen kann und Flüssigkeit aufsaugt, die einen Bakterienherd bilden könnte. Di‹ Isolierstoffbahn behindert die freie Luftzirkulation, so daß die durch Konvektion entstehenden Kälteverluste der Kälteeinrichtung verringert werden.

Aufgabe der Erfindung ist es, eine Isolierstoffbahn der eingangs genannten Art zu schaffen, die eine noch besser‹ thermische Isolierung ermöglicht und auch die auf auftre‹ fende Wärmestrahlung zurückzuführenden Kälteverluste verringert.

Zur Lösung dieser Aufgabe ist erfindungsgemäß vorgesehen, daß die Kunststoffschicht auf ihrer Außenseite eine Metal schicht aufweist.

Durch die metallisierte Außenseite der Kunststoffschicht wird die aus der Umgebung der Kälteeinrichtung auf die Isolierstoffbahn auftreffende Wärmestrahlung zu einem großen Anteil reflektiert. Dadurch wird eine Erwärmung der Kunststoffschicht weitgehend vermieden. Die Sekundär· strahlung der Kunststoffschicht in die Kühleinrichtung hinein wird also erheblich verringert.

Die Metallschicht kann im Prinzip direkt auf die Außenseite der bestrichenen Kunststoffschicht aufgebracht werden. In diesem Fall ist sie allerdings ungeschützt, so daß die Gefahr des Zerkratzens oder anderer Beschädigungen besteht. Um die Metallschicht zu schützen, kann sie zweckmäßigerweise auf eine transparente Folie aufgedampft werden. Die mit der aufgedampften Metallschicht versehene Folie kann dann derart auf die bestrichene Kunststoffschicht aufkaschiert werden, daß die Folienseite außen liegt. Die Folie bildet daher einen Schutzfilm über der Metallschicht.

Die Kunststoffschicht besteht vorzugsweise auf einem Polyestervlies, das mit Polyvinylchlorid bestrichen ist. Die transparente Folie kann ebenfalls aus einem Polyestermaterial bestehen.

Zur Verhinderung des Absetzens von Kondenswasser an der Isolierstoffbahn ist diese zweckmäßigerweise mit einer durchgehenden Perforation versehen, deren Löcher jeweils in Bahnlängsrichtung auf Lücke angeordnet sind. Die Perforation ermöglicht zwar eine gewisse Luftzirkulation und dadurch Kälteverluste, sie verhindert aber die Entstehung von Kondenswasser an der Isolierstoffbahn bzw. bewirkt das sofortige Verdampfen entstandenen Kondenswassers. Die dadurch frei werdende Verdampfungskälte kompensiert die durch die Luftzirkulation entstehenden Kälteverluste. An der perforierten Isolierstoffbahn entsteht ein Verdampfungsschleier.

Durch die versetzte Anordnung der Löcher in den einzelnen Lochreihen wird erreicht, daß Kondenswassertropfen, wenn sie auf der Isolierstoffbahn entlanglaufen, bereits nach kurzer Zeit auf ein Loch treffen und verdampft werden können. Der Lochdurchmesser liegt zweckmäßigerweise in der Größenordnung von 1 mm bis 1,5 mm und der Lochabstand in der Größenordnung von 2,5 mm bis 3,5 mm.

Die Isolierstoffbahn wird vorzugsweise in Verbindung mit Schnapprollos eingesetzt, bei denen sie auf eine Welle aufgerollt wird.

Im folgenden wird unter Bezugnahme auf die Figuren ein Ausführungsbeispiel der Erfindung näher erläutert. Es zeigen:

Figur 1 schematisch eine Seitenansicht einer Kühlbox, deren Öffnung mit der Isolierstoffbahn abgedeckt ist,

Figur 2 einen Querschnitt durch eine oben offene Kühltruhe, deren Öffnung ebenfalls mit einer Isolierstoffbahn abgedeckt ist,

Figur 3 in stark vergrößertem Maßstab einen Querschnitt durch die Isolierstoffbahn und

Figur 4 eine Draufsicht einer perforierten Isolierstoffbahn.

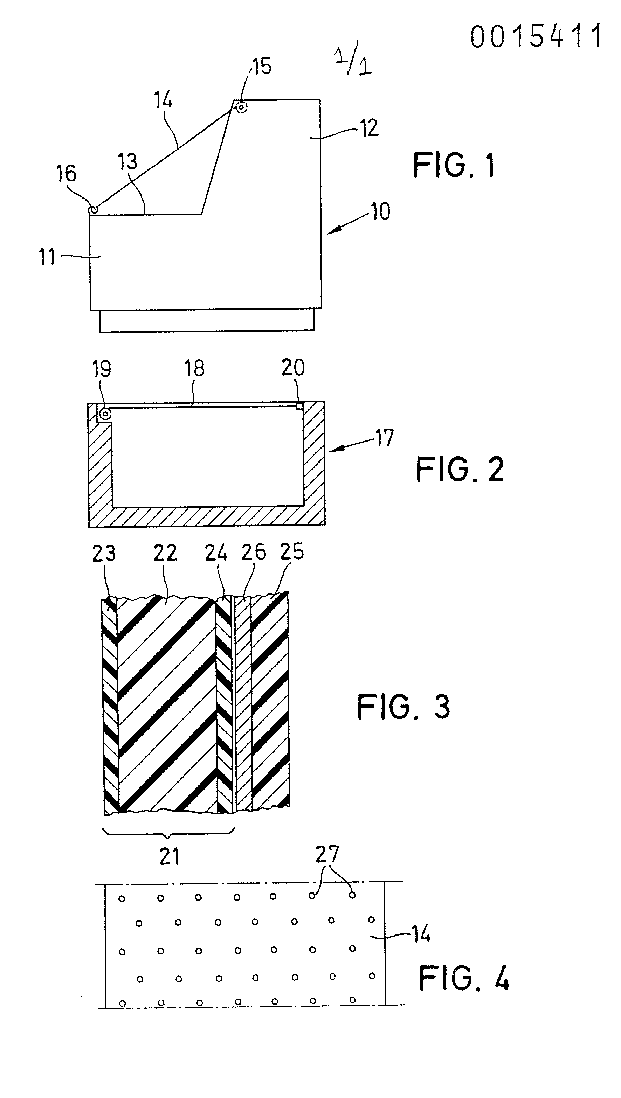

In Figur 1 ist eine Kühlbox 10 in Seitenansicht dargestellt, wie sie in Lebensmittelgeschäften, Supermärkten u.dgl. aufgestellt wird. Diese Kühlbox besteht aus einem kastenförmigen Unterteil 11 und einem sich daran anschließenden kleineren Oberteil 12. Die von dem Unterteil 11 und dem Oberteil 12 gebildete stufenförmige Öffnung 13 wird nach Ende der Geschäftszeit mit der Isolierstoffbahn 14 abgedeckt, die von einer Rollowelle 15 abgezogen wird. Die Rollowelle 15 ist in der Nähe der Vorderkante des Oberteiles 12 an der Kühltruhe gelagert und an ihrem vorderen Ende befindet sich eine Leiste 16, die an dem gegenüberliegenden Ende der Öffnung 13 festgehakt wird. Wenn diese Verhakung gelöst wird, wird die Isolierstoffbahn 14 wieder auf die Rollowelle 15 aufgewickelt.

Bei dem Ausführungsbeispiel der Figur 2 wird eine Isolierstoffbahn 18 dazu benutzt, ein oben offene Kühltruhe 17 abzudecken. Die Rollowelle 19 befindet sich in der Nähe des oberen Randes einer Seitenwand der Kühltruhe und die Leiste 20 wird nach dem Herausziehen der Isolierstoffbahn an der gegenüberliegenden Seitenwand befestigt. Da die Isolierstoffbahn 18 bei dem Ausführungsbeispiel der Figur 2 im Bereich des Kälteschleiers der Kühltruhe 17 liegt, braucht sie keine Perforation aufzuweisen, da sich in diesem Bereich Kondenswasser ohnehin nicht absetzt. Dagegen hat die Isolierstoffbahn 14 bei der in Figur 1 dargestellten Anbringungsart eine Perforation, wie sie in Figur 4 dargestellt ist.

Figur 3 zeigt einen Querschnitt durch die Isolierstoffbahn 14 bzw. 18. Das Trägermaterial 21 besteht aus einem reißfesten Polyestervlies 22, das beidseitig mit einem feuchtigkeitsdichten Strich 23, 24 aus Polyvinylchlorid beschichtet ist. Das Trägermaterial 21 ist auf seiner Oberseite mit einer Polyesterfolie 25 kaschiert, die auf ihrer dem Strich 24 zugewandten Seite eine aufgedampfte Aluminiumschicht 26 aufweist. Die Folie 25 ist durchsichtig, so daß auftreffende Wärmestrahlung durch sie hindurchgeht, um an der Aluminiumschicht 26 reflektiert zu werden. Die mit der aufgedampften Schicht 26 versehene Folie 25 ist thermisch auf den Strich 24 aufgebracht worden.

0015411

Die einzelnen Schichten sind in Figur 3 nicht maßstäblich dargestellt. Die gesamte Isolierstoffbahn hat eine Stärke von ca. 0,5 mm. Die Stärke der Folie 25 beträgt ca. 20 bis 30 Mikron und die Stärke der aufgedampften Schicht 26 ca. zwischen 5 und 10 Mikron.

Figur 4 zeigt eine Draufsicht auf die Isolierstoffbahn 14 zur Veranschaulichung der Lage der Löcher 27. Die Löcher 27 sind in Form von Lochreihen angeordnet, wobei die Löcher zweier benachbarter Lochreihen jeweils gegeneinander versetzt sind. Der Lochdurchmesser beträgt 1 bis 1,5 mm und der Lochabstand in einer Reihe 2,5 bis 3,5 mm. Die Löcher 27 gehen durch die gesamte Stärke der Isolierstoffbahn hindurch.

0015411

A n s p r ü c h e

1. Isolierstoffbahn zum Bedecken von Kälteeinrichtungen, mit einer beidseitig bestrichenen Kunststoffschicht, d a d u r c h   g e k e n n z e i c h n e t, daß die Kunststoffschicht (22) auf ihrer Außenseite eine Metallschicht (26) aufweist.

2. Isolierstoffbahn nach Anspruch 1, dadurch gekennzeichnet, daß die Metallschicht (26) auf eine transparente Folie (25) aufgedampft ist.

3. Isolierstoffbahn nach Anspruch 1 oder 2, dadurch gekennzeichnet, daß die Metallschicht (26) mit einer bestrichenen Seite (24) der Kunststoffschicht (22) thermisch verbunden ist.

4. Isolierstoffbahn nach einem der Ansprüche 1 bis 3, dadurch gekennzeichnet, daß die Kunststoffschicht (22) aus einem Faservlies besteht.

5. Isolierstoffbahn nach einem der vorhergehenden Ansprüche, dadurch gekennzeichnet, daß die Kunststoffschicht (22) aus einem Polyestervlies besteht und mit Polyvinylchlorid bestrichen ist.

6. Isolierstoffbahn nach Anspruch 2, dadurch gekennzeichnet, daß die transparente Folie aus einem Polyester besteht.

0015411

7. Isolierstoffbahn nach einem der vorhergehenden Ansprüche, dadurch gekennzeichnet, daß eine durchgehende Perforation (27) vorgesehen ist, deren Löcher jeweils in Bahnlängsrichtung auf Lücke angeordnet sind.

8. Isolierstoffbahn nach Anspruch 7, dadurch gekennzeichnet, daß die Löcher einen Durchmesser von etwa 1 bis 1,5 mm und gegenseitige Abstände von ca. 2,5 bis 3,5 m: haben.

FIG. 1

FIG. 2

FIG. 3

FIG. 4

Europäisches
Patentamt

**EUROPÄISCHER RECHERCHENBERICHT**

0015411
Nummer der Anmeldung

EP 80 10 0704

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| | <u>DE - A - 1 955 953</u> (VEROLME) <br> * Ansprüche 1,4-8,12; Seite 1, Absatz 1; Seite 3, Absatz 2 - Seite 7, Absatz 1; Figur 1 * <br><br> -- | 1-6 | A 47 F  3/04 <br> F 16 L 59/08 <br> .59/02 <br> B 32 B 15/14 <br> E 04 B  1/78 |
| | <u>FR - A - 1 323 303</u> (F. JEHIER) <br> * Seiten 1,2; Figur 1 * <br><br> -- | 1,2,4 | |
| A | <u>DE - U - 1 924 832</u> (ECONO-COVER) | | **RECHERCHIERTE SACHGEBIETE (Int. Cl)** |
| A | <u>US - A - 4 109 484</u> (W.E. CUNNING-HAM) | | A 47 F  3/04 <br> E 04 B  1/78 <br> F 16 L 59/08 <br> 59/02 <br> B 32 B |
| A | <u>GB - A - 851 053</u> (I.C.I.) <br> * Seite 7, Zeilen 44-94 * <br><br> ---- | | |

Der vorliegende Recherchenbericht wurde für alle Patentansprüche erstellt

| Recherchenort | Abschlußdatum der Recherche | Prüfer |
|---|---|---|
| Den Haag | 03-06-1980 | BLASBAND |

EPA form 1503.1  06.78